# EUROPÄISCHE PATENTSCHRIFT

(11) **EP 1 138 706 B1**
(45) Veröffentlichungstag und Bekanntmachung des Hinweises auf die Patenterteilung: **01.12.2010**
(21) Anmeldenummer: 01106340.1
(22) Anmeldetag: 16.03.2001
(51) Int. Cl.: C08G 18/02, C08G 18/79, C08L 75/06

(54) **Blockcopolymere auf Basis von Polycarbodiimiden, ein Verfahren zu ihrer Herstellung und ihre Verwendung als Hydrolysestabilisatoren**
Block copolymers based on polycarbodiimides, a process for their preparation and their use as stabilising agents against hydrolysis
Copolymères blocs à base de polycarbodiimides, leur procédé de préparation et leur utilisation comme agents stabilisants à l'hydrolyse

(30) Priorität: 29.03.2000 DE 10015658
(43) Veröffentlichungstag der Anmeldung: 04.10.2001
(73) Patentinhaber: RHEIN-CHEMIE RHEINAU GmbH, 68219 Mannheim (DE)
(72) Erfinder: Tebbe, Heiko Dr., 68775 Ketsch (DE); Heiliger, Ludger Dr., 67433 Neustadt (DE); Müller, Volker, 76661 Philippsburg (DE)
(74) Vertreter: Siegers, Britta

(56) Entgegenhaltungen:
- EP-A- 0 460 481
- EP-A- 0 940 389
- WO-A-01/51535
- DE-A- 19 821 666
- US-A- 5 210 170

## Beschreibung

Gegenstand der Erfindung sind neue Blockcopolymere auf der Basis von Polycarbodiimiden, ein Verfahren zu ihrer Herstellung sowie ihre Verwendung als Hydrolysestabilisatoren in Estergruppen enthaltenden Polymerisaten.

Organische Carbodiimide sind bekannt. Ihre Chemie und ihre Herstellung werden z.B. in Chemical Reviews, Vol. 81 (1981), Seiten 589 bis 639 und Angewandte Chemie 74 (1962), Seiten 801 bis 806 beschrieben.

Monocarbodiimide und oligomere Polycarbodiimide können beispielsweise hergestellt werden durch Einwirkung von basischen Katalysatoren auf Mono- oder Polyisocyanate. Geeignet als basische Katalysatoren sind z.B. gemäß GB-A-1 083 410 heterocyclische, Phosphor enthaltende Verbindungen, und nach Angaben der DE-B-11 30 594 Phospholene und Phospholidine sowie deren Oxide und Sulfide.

Ferner werden Polycarbodiimide mit endständigen Urethangruppen z.B. in der US-A-2 941 983 und DE-B-22 48 751 beschrieben. Die Produkte können beispielsweise hergestellt werden durch Carbodiimidisierung von Diisocyanaten mit sterisch gehinderten Isocyanatgruppen und anschließender partieller oder vollständiger Urethanisierung der endständigen NCO-Gruppen mit Alkoholen. Bei Verwendung von aromatischen Diisocyanaten mit Isocyanatgruppen unterschiedlicher Reaktivität können, wie in DE-A-2 248 751 beschrieben, die Isocyanatgruppen mit höherer Reaktivität mit Alkohol partiell oder vollständig in die entsprechenden Urethangruppen überführt und danach die verbliebenen Isocyanatgruppen unter Kohlendioxidabspaltung zu Carbodiimidgruppen umgesetzt werden.

Die Carbodiimide und Polycarbodiimide finden vorzugsweise Verwendung als Stabilisatoren gegen die hydrolytische Spaltung von Kunststoffen auf Polyesterbasis. Nach Angaben der DE-A-14 94 009 eignen sich hierfür insbesondere aromatische und/oder cycloaliphatische Monocarbodiimide, die in 2- und 2'-Stellung substituiert sind, wie 2,2',6',6'-Tetraisopropyl-diphenylcarbodiimid. Polycarbodiimide mit einem Molekulargewicht von über 500 und einem Gehalt von mehr als 3 Carbodiimidgruppen werden als Stabilisatoren gegen Einflüsse von Wärme und Feuchtigkeit in estergruppenhaltigen Kunststoffen in der DE-B-12 85 747 beschrieben.

Obgleich durch den Zusatz dieser (Poly)carbodiimide als Stabilisatoren eine weitgehende Stabilität estergruppenhaltiger Kunststoffe gegen feuchte Wärme, Wasser und Wasserdampf erzielt werden kann, weisen die Produkte auch Nachteile auf. Nachteilig an den technisch vorzugsweise verwendeten tetra-alkylsubstituierten Monocarbodiimiden, wie z.B. 2,2',6,6'-Tetraisopropyldiphenylcarbodiimid, ist ihr relativ hoher Dampfdruck und bedingt durch das niedrige Molekulargewicht ihre Neigung zur Migration aus den Polyadditionsprodukten, z.B. thermoplastischen Polyurethanen (TPU), oder Polykondensationsprodukten, z.B. Polyterephthalaten. Zur Beseitigung dieses Mangels finden nach Angaben der EP-A-0 460 481 substituierte Monocarbodiimide oder oligomere, substituierte Polycarbodiimide mit endständigen Isocyanatgruppen Verwendung, die hergestellt werden aus substituierten Diisocyanaten, und die praktisch weder in der Hitze, z.B. unter den üblichen Verarbeitungsbedingungen, noch bei Raumtemperatur giftige, flüchtige aus den eingesetzten Carbodiimiden stammende Substanzen abspalten. Polycarbodiimide dieser Art besitzen höhere Schmelzpunkte oder sind unschmelzbar und können nur mit einem beträchtlichen apparativen und zeitlichen Aufwand in die Polyurethane und/oder ihre Ausgangsstoffe eingebracht werden. Die Verteilung der Polycarbodiimide in den Estergruppen enthaltenden Kunststoffen ist daher vielfach unzureichend homogen, so dass die Stabilisatorwirksamkeit nicht den Erwartungen entspricht.

Durch die Überführung eines Teils der endständigen Isocyanat- in Urethangruppen, z.B. gemäß DE-A-22 48 751 oder US-A-2 941 983, können leichter schmelzende Polycarbodiimidderivate erhalten werden.

Wegen des statistischen Auftretens von Monocarbodiimiden und kurzkettigen Homologen besteht auch in diesen Verbindungen die Tendenz, Spaltprodukte mit niedrigem Dampfdruck und hoher Migrationsneigung im Kunststoff zu bilden, die zur Ausgasung bei den höheren Prozesstemperaturen neigen.

Die endverkappten Urethangruppen bewirken in Polymeren, die nicht zu Wasserstoffbrückenbindungen fähig sind, wie Polyester und Polycarbonate, Unverträglichkeitseffekte, die ihre Wirksamkeit einschränken

EP-A-0940389 offenbart Polymere aus einem Carbodiimid, basierend auf TMXDI und Ethan-1,2-diol, sowie deren Verwendung zur Stabilisierung der Esthergruppen in einem Polyadipat. Die Isocyantgruppen sind nicht an aromatische Kohlenstoffatome gebunden.

EP-A-0460481 offenbart Polymere aus einem Carbodiimid basierend auf 2,4,6-Triisopropylphenyl-1,3-diisocyanat und 1,4-Butandiol mit einem Hydroxygruppengehalt von 15,6 Gew.-%. Statt des genannten Diisocyanats kann auch 4,4-Diisocyanato-3,3,5,5-Tetraisopropyldiphenylmethan eingesetzt werden.
Die hier beschriebenen Carbodiimide enthalten stets NCO-Gruppen.

WO 01/51535 ist ein Dokument entsprechend Artikel 54(3) EPÜ und offenabart ein Polymer aus einem Carbodiimid basierend auf TMXDI und Dimethylolproprionsäure oder Hydroxypivalinsäure. Diese Carbodiimide basieren daher auf aliphatischen oder araliphatischen Isocyanaten.

Ziel der vorliegenden Erfindung war es, die o.g. Nachteile ganz oder zumindest teilweise zu beseitigen und Hydrolyseschutzmittel zur Verfügung zu stellen, die einen hohen Wirkungsgrad bei niedriger Dosierung in Estergruppen enthaltenden Polymerisaten aufweisen, nicht toxisch sind, eine hohe thermische Beständigkeit besitzen, keine toxischen Spaltprodukte bei thermischer Belastung freisetzen, mit der polymeren Matrix gut verträglich sind und daher nicht aus den Estergruppen haltigen Polymerisaten ausblühen.

Diese Aufgabe konnte überraschenderweise gelöst werden durch Blockcopolymere auf der Basis von Polycarbodiimiden der Formel (I)

X-[-(A)ₘ-(B)ₙ-]ₒ-X (I),

in der
- X: gleich oder verschieden und ausgewählt ist aus der Gruppe -NHCO-R, -NHCONH-R, -NHCOO-R, -NHCOS-R, -COO-R, -O-R, -NR₂, -S-R, -OH, -S-H, -NH₂, und -NHR bevorzugt jedoch für -NHCONH-R, -NHCOO-R, -OH steht, und wobei die Reste R einen Alkyl-, Cycloalkyl-, Aralkyl- oder Aryl-Rest mit 1 bis 30, bevorzugt von 2 bis 18, Kohlenstoff- atomen bedeuten,
- n: eine ganze Zahl von 1 bis 1000, bevorzugt von 5 bis 200, darstellt.
- m: eine ganze Zahl von 5 bis 200 darstellt,
- o: eine ganze Zahl von 1 bis 500, bevorzugt von 3 bis 100, ist,
- A: ausgewählt ist aus der Gruppe der Carbodiimide oder Polycarbodiimide der Formel (II)

-(-N=C=N-Y-)- (II),

in der
Y ausgewählt ist aus der Gruppe von ortho- oder bisortho-substituierten Aromaten und substituierten Diphenylmethanen
und
- B: ausgewählt ist aus der Gruppe (Poly)Diole, (Poly)Diamine, (Poly)Dimercap- tane, (Poly)Aminoalkohole, (Poly)Aminomercaptane und (Poly)Mercapto- alkohole.

Gegenstand der Erfindung ist weiterhin ein Verfahren zur Herstellung der erfindungsgemäßen Blockcopolymere und die Verwendung der erfindungsgemäßen Blockcopolymere als Stabilisator gegen den hydrolytischen Abbau von Estergruppen enthaltenden Polymerisaten.

Zur Herstellung der in die erfindungsgemäßen Blockcopolymeren der Formel (I) eingebauten Polycarbodiimide (Komponente A, Formel II) können Diisocyanate als Ausgangsverbindungen bei erhöhten Temperaturen, z.B. bei 40 bis 200°C, in Gegenwart von Katalysatoren unter Abspaltung von Kohlendioxid kondensiert werden. Geeignete Verfahren werden in DE-A-11 30 594 beschrieben. Als Katalysatoren haben sich z.B. starke Basen oder Phosphorverbindungen bewährt. Vorzugsweise werden Phospholenoxide, Phospholidine und Phospholinoxide verwendet. Zur Herstellung der erfindungsgemäßen Komponente A eignen sich ortho- oder bis - orthosubstituierte aromatische Diisocyanate sowie auf substituierten Diphenylmethanen basierende Diisocyanate, wobei bevorzugt durch C₁- bis C₄-Alkyl substituierte aromatische Diisocyanate, wie 2,4,6-Triisopropylphenyl-1,3-diisocyanat, 2,4,6-Triethylphenyl-1,3-diisocyanat oder 2,4,6-Trimethylphenyl-1,3-diissocyanat, substituierte Diisocyanatodiphenylmethane, wie 3,3',5,5'-Tetraisopropyl-4,4'-diisocyantodiphenylmethan oder 3,3',5,5'-Tetraethyl-4,4'-diisocyanatodiphenylmethan verwendet werden.

Diese Diisocyanate können zur Herstellung der Komponente A der Formel (I) einzeln oder gemischt eingesetzt werden.

Durch die Wahl der Reaktionsbedingungen, wie Reaktionstemperatur, Reaktionszeit und Katalysatormenge, kann der Polymerisationsgrad bzw. Kondensationsgrad m in Formel (I) eingestellt werden. Dieser kann durch die Bestimmung des NCO-Gehaltes oder durch die Kohlendioxidentwicklung einfach verfolgt werden. Bevorzugt wird der Kondensationsgrad so eingestellt, dass noch restliche Isocyanate im Bereich von 1 bis 8 Gew.-% im Polycarbodiimid (Komponente A) vorhanden sind.

Als Komponente B der erfindungsgemäßen Blockcopolymere (I) können Diole, Diamine, Dimercaptane Aminoalkohole, Aminomercaptane, Mercaptoalkohole oder deren Polymerisationsprodukte und Gemische aus ihnen verwendet werden. Bevorzugt werden aus der Gruppe der Diole: 1,2-Ethandiol, 1,4-Butandiol, 2,2-Bis-(4-hydroxyphenyl)-propan, Polyetherdiole auf der Basis von Ethylenglykol, Propylenglykol und Tetramethylenglykol und ihre Mischungen, Polyesterdiole auf der Basis Adipinsäure, Ethylenglykol, Propylenglykol, Butandiol und/oder Tetramethylenglykol, Polyesterdiole auf Basis Ethylenglykol und Phosphorsäure, Diole aus Polyolefinen, z.B. aus Ethylen/Butylenpolymerisaten. Insbesondere werden genannt: Polyesterdiole auf Basis Adipinsäure und Ethandiol und Polyetherdiole auf Basis Ethylenglykol oder Propylenglykol mit einem mittleren Molekulargewicht im Bereich von 300 bis 10.000 g/mol.

Bevorzugte Diamine sind Hexamethylendiamin, Ethylendiamin und Polyetheramine, die durch Terminierung von Polyethern mit Aminen hergestellt werden. Zu nennen sind Polyetheramine auf Basis von Propylenglykol und/oder Ethylenglykol mit einem mittleren Molekulargewicht von 300 bis 10.000 g/mol.

Bevorzugte Dimercaptane sind 1,6-Hexandithiol, 1,12-Dodecyldithiol, 1,18-Oktadecyldithiol, und Polyether-polydisulfide, sogenannte Thiokole, mit einem mittleren Molekulargewicht von 500 bis 10.000 g/mol.

Die Herstellung der aufgeführten Verbindungen der Komponente B ist allgemein bekannt. So wird z.B. die Synthese von Polyetherdiolen in Kunststoff-Handbuch, Volume 7, 3. Auflage (1993), Hanser-Verlag, Seite 58-65 und die Synthese von Polyesterdiolen in Kunststoff-Handbuch, Volume 7, 3. Auflage (1993), Hanser-Verlag, Seite 67-71 beschrieben. Die dort erwähnten Diole sind daher Gegenstand der Erfindung.

Die erfindungsgemäßen Blockcopolymere werden durch Copolymerisation der beiden Ausgangskomponeten A und B hergestellt. Grundsätzlich können hierfür die bekannten Polymerisationsverfahren, wie radikalische Polymerisation, kationische Polymerisation, anionische Polymerisation, Polykondensation oder Polyaddition, verwendet werden. Bevorzugt werden die erfindungsgemäßen Blockcopolymere mittels Polyaddition von Diisocyanaten mit Diolen zu Polyurethanen oder mit Diaminen zu Polyharnstoffen, wie in Kunststoff-Handbuch, Volume 7, 3. Auflage (1993), Hanser-Verlag, Seite 11-15 beschrieben, hergestellt. Dazu werden die Restisocyanate enthaltenden Polycarbodiimide der Komponente A mit den endständigen funktionellen Gruppen, d.h. Aminen oder Alkoholen, bei erhöhter Temperatur und unter Verwendung eines Katalysators umgesetzt. Die Reaktionstemperatur liegt hierbei bei 30° bis 200°C. Als Katalysator können die gängigen Polyurethankatalysatoren, z.B. Zinn (II)-Verbindungen, Zinn (IV)-Verbindungen oder tertiäre Amine, wie in Kunststoff-Handbuch, Volume 7, 3. Auflage (1993), Hanser-Verlag, Seite 104-110 beschrieben, verwendet werden. Als besonders geeignet haben sich Dibutylzinndilaurat und/oder Triethylendiamin in Konzentrationen von ca. 0,05 bis 1 Gew.-% herausgestellt.

Über die stöchiometrische Zusammensetzung kann die Molmasse und somit der Polymerisationsgrad o und die Endgruppen der erfindungsgemäßen Blockcopolymere eingestellt werden. Bevorzugt ist ein Molverhältnis von Komponente A zu Komponente B im Bereich von 0,7 bis 1,3:1, insbesondere von 0,90 bis 1,10:1.

Die Reaktion der beiden Komponenten kann in den für die Chemie typischen Reaktionsaggregaten durchgeführt werden. Besonders geeignet als Reaktionsaggregat sind Rührkessel, Kneter, 2-Komponenten-Mischmaschinen, wie im Kunststoff-Handbuch, Volume 7, 3. Auflage (1993), Hanser-Verlag, Seite 143-147 beschrieben, und Extruder.

Die bei der erfindungsgemäßen Umsetzung der Komponeten A und B entstehenden Blockcopolymere weisen noch reaktive Endgruppen, wie Isocyanat-, Amino-, Hydroxy-und Mercaptogruppen auf, die nach gängigen chemischen Verfahren mit entsprechenden funktionalisierten Alkyl-, Cycloalkyl-, Aralkyl- oder Aryl-Verbindungen mit 1 bis 30 Kohlenstoffatomen, bevorzugt 2 bis 18, Kohlenstoffatomen, zu der gewünschte Endgruppe X in Formel (I) umgesetzt werden können.

Die erfindungsgemäßen Blockcopolymere der Formel (I) besitzen ein mittleres Molekulargewicht von ca. 1.000 bis 100.000 g/mol.

Die erfindungsgemäßen Blockcopolymere eignen sich hervorragend als Säurefänger, insbesondere von organischen Säuren, und finden somit vorzugsweise Verwendung als Stabilisatoren gegen den hydrolytischen Abbau von estergruppenhaltigen Polymerisaten. Hierbei beinhaltet die Gruppe der Polymerisate sowohl Polykondensationsprodukte, z.B. Polyester, Polyamide, Polycaprolactone, Polyesteramide, Polyetherimide und Polyetherester, als auch Polyadditionsprodukte, z.B. Polyurethane, Polyharnstoffe und Polyharnstoff/Polyurethan-Elastomere und radikalisch hergestellte Polymere, z.B. Polyvinylacetat und native Polymere, z. B. Derivate der Cellulose und Stärke, insbesondere Celluloselaktat.

Die Konzentration der erfindungsgemäßen Blockcopolymere in den zu stabilisierenden Estergruppen enthaltenden Polymerisaten beträgt im allgemeinen 0,01 bis 15 Gew.-%, vorzugsweise 0,1 bis 5 Gew.-%, bezogen auf die Gesamtmischung. In Einzelfällen, bei besonderer Beanspruchung des Polymeren, kann die Konzentration auch höher liegen.

Die erfindungsgemäßen Blockcopolymere können nach unterschiedlichen Methoden in die zu stabilisierenden Estergruppen enthaltenden Polymerisate eingebracht werden. Beispielsweise können die erfindungsgemäßen Blockcopolymere mit einem der Edukte, die zur Herstellung der Polymerisate verwendet werden, vermischt werden z.B. den Isocyanaten oder den Polyolen, oder die Blockcopolymere können direkt bei der Herstellung der Polyurethane in die Reaktionsmischung zudosiert werden. Weiterhin können die erfindungsgemäßen Blockcopolymere in die Schmelze der ausreagierenden Polymerisate gegeben werden. Nach einer weiteren Verfahrensweise können die erfindungsgemäßen Blockcopolymere auch in einem Trägermaterial, wie z.B. thermoplastische Formmassen, vordispergiert werden, um später diese in der Regel in festen Granulaten vorliegenden Masterbatche in die Endanwendung einzudosieren.

### Beispiele:

### 1. Carbodiimid-Synthesen

### Beispiel 1a: (nicht erfindungsgemäss)

295,0 g (1,03 mol) 2,4,6-Triisopropylphenyl-1,3-diisocyanat mit einem NCO-Gehalt von 29,5 Gew.-% werden in Gegenwart von 0,2 Gew.-% (0,59 g) 1-Methylphospholen-1-oxid in 200 ml wasserfreiem Xylol auf 100°C erhitzt und bei dieser Temperatur unter Kohlendioxidentwicklung kondensiert. Nach Erreichen eines NCO-Gehaltes der Reaktionsmischung von 5,0 Gew.-%, Reaktionszeit ca. 11 Stunden, werden das Lösemittel, Restmonomere und Katalysatorreste im Vakuum abdestilliert.

Man erhält 270,2 g einer Mischung aus oligomeren Polycarbodiimiden mit einem NCO-Gehalt von 7,0 Gew.-% und einem Carbodiimid-Gehalt von 12,6 Gew.-%. Die Struktur der Verbindung wurde durch ein IR-Spektrum bestätigt.

### Beispiel 1b: (nicht erfindungsgemäss)

500 g (1,2 mol) 3,3',5,5'-Tetraisopropyl-4,4'-diisocyanatodiphenylmethan mit einem NCO-Gehalt von 19,3 Gew.-% werden in Gegenwart von 0,2 Gew.-% (1,0 g) 1-Methylphospholen-1-oxid in 500 ml wasserfreiem Xylol auf 120°C erhitzt und bei dieser Temperatur unter Kohlendioxidabspaltung kondensiert. Nach Erreichen eines NCO-Gehaltes der Reaktionsmischung von 2,9 Gew.-%, Reaktionszeit ca. 10 Stunden, werden das Lösemittel, Restmonomere und Katalysatorreste im Vakuum abdestilliert.

Man erhält 280 g einer Mischung aus oligomeren Polycarbodiimiden mit einem NCO-Gehalt von 2,3 Gew.-%, einem Carbodiimid-Gehalt von 9,4 Gew.-%, einem Glaspunkt von 58°C und einer mittleren Molmasse von 3200 g/mol, gemessen mittels Gelpermeationschromatographie (GPC). Die Struktur der Verbindung wurde durch ein IR-Spektrum bestätigt.

### Beispiel 1c: ( Vergleich)

300 g (1,24 mol) 1,3-Bis-(1-methyl-1-isocyanatoethyl)-benzol mit einem NCO-Gehalt von 34,3 Gew.-% werden in Gegenwart von 0,2 Gew.-% (0,6 g) 1-Methylphospholen-1-oxid lösungsmittelfrei auf 180°C erhitzt und bei dieser Temperatur unter Kohlendioxidentwicklung kondensiert. Nach Erreichen eines NCO-Gehaltes der Reaktionsmischung von 8,8 Gew.-%, Reaktionszeit ca. 15 Stunden, werden die Restmonomere und Katalysatorreste im Vakuum abdestilliert.

Man erhält 215 g einer Mischung aus oligomeren Carbodiimiden mit einem NCO-Gehalt von 8,4 Gew.-%, einem Carbodiimid-Gehalt von 15 Gew.-% und einer Jodfarbzahl, gemessen nach DIN 6162, von 12,0. Die Struktur der Verbindung wurde durch ein IR-Spektrum bestätigt.

### 2. Blockcopolymer-Synthesen

### Beispiel 2a:

85 g des oligomeren Polycarbodiimides aus Beispiel 1a werden in 100 ml wasserfreiem Toluol unter Stickstoff bei 60°C homogenisiert. Anschließend werden 16,3 g (0,14 mol) pulverisiertes 2,2-Bis-(4-hydroxyphenyl)-propan portionsweise zugesetzt und dann 1,5 g Katalysator, 33 %-ige Lösung von Triethylendiamin in Dipropylenglykol, zugegeben. Der Ansatz wird für 12 Stunden im Rückfluss gekocht. Danach wird das Lösemittel im Vakuum abdestilliert.

Man erhält 93 g eines spröden Pulvers mit einem NCO-Gehalt von 0 Gew.-%, einem Carbodiimid-Gehalt von 10,6 Gew.-%, einem Glaspunkt von 75,2°C und einem mittlerem Molgewicht von 5300 g/mol.

### Beispiel 2b:

100 g des oligomeren Polycarbodiimides aus Beispiel 1b werden in 100 ml wasserfreiem Toluol unter Stickstoff gelöst. Dann werden 29,4 g Desmophen 1600 u, ein linearer Polyester der Firma Bayer AG, mit einer Hydroxylzahl von 110,3 mg KOH/g und einer Viskosität von 220 mPas, gemessen bei 23°C, und 0,3 g des Katalysators Dibutylzinndilaurat zugegeben und die Reaktionsmischung bei 80°C für 3 Stunden gerührt. Anschließend wird das Lösemittel im Vakuum abdestilliert.

Man erhält 77,4 g eines spröden, bernsteinfarbenen Blockcopolymeren mit einem NCO-Gehalt von 0 Gew.-%, einem Carbodiimid-Gehalt von 7,3 Gew.-% und einem Glaspunkt von 36,3°C.

### Beispiel 2c: ( Vergleich )

100 g des oligomeren Polycarbodiimides aus Beispiel 1c werden bei 70°C in ein Rührgefäß unter Rühren vorgelegt. Anschließend werden 0,3 g Dibutylzinndilaurat und 64,7 g aufgeschmolzenes Polyethylenglykol (Molmasse 600 g/mol, Hydroxylzahl 174,7 mg KOH/g) zudosiert und das Gemisch für 5 min intensiv bei 70°C gerührt. Dann wird der Rührer entfernt und das hochviskose Reaktionsgemisch für 2 Stunden bei 70°C im Trockenschrank nachgetempert.

Man erhält 154 g eines hochviskosen Blockcopolymeren mit einem NCO-Gehalt von 0 Gew.-%, einem Carbodiimid-Gehalt von 9,1 Gew.-%, einem Glaspunkt von -26°C und einer mittleren Molmasse von 9000 g/mol.

### Beispiel 2d: ( Vergleich )

168,1 g eines Diols, bestehend aus einem Copolymerisat aus Ethylen und Butylen mit einer Viskosität, gemessen bei 25°C, von 50000 cps und einer Hydroxylzahl von 33,8 mg KOH/g, werden bei 50°C in einem Kolben vorgelegt. Unter Rühren werden nun 50 g des oligomeren Polycarbodiimides aus Beispiel 1c und 0,65 g Dibutylzinndilaurat zugegeben. Das Reaktionsgemisch wird dann für 2 Stunden auf 100°C erhitzt.

Man erhält 215 g eines hochviskosen Blockcopolymeren mit einem NCO-Gehalt von 0 Gew.-%, einem Carbodiimid-Gehalt von 3,4 Gew.-%, einem Glaspunkt von -55,3°C und einer mittleren Molmasse von 8400 g/mol.

### Beispiel 2e:

### ( Vergleich )

In einem diskontinuierlichen Zweischneckenkneter mit einer Schneckengeometrie von 42:6 D werden bei einer Temperatur von 60°C 116 g eines Polyesterpolyols, bestehend aus Adipinsäure und Butandiol mit einer Hydroxylzahl von 48,9 mg KOH/g, vorgelegt. Anschließend werden 0,8 g Dibutylzinndilaurat und 49 g des oligomeren Polycarbodiimides aus Beispiel 1c über den Einzug in die ZSK gegeben. Nach 30 min ist die Reaktion beendet und das Reaktionsgemisch wird über einen Ablass in der Frontplatte aus dem Kneter ausgetragen.

Man erhält 150 g eines Blockcopolymeren mit einem NCO-Gehalt von 0 Gew.-%, einem Carbodiimid-Gehalt von 4,4 Gew.-%, einem Schmelzpunkt von 52°C und einer mittleren Molmasse von 4000 g/mol.

### Beispiel 2f: ( Vergleich )

346,5 g des oligomeren Polycarbodiimides aus Beispiel 1c werden bei 60°C in ein Rührgefäß unter Rühren vorgelegt. Anschließend werden 3,2 g Triethylendiamin und 49,5 g 1,6-Hexandithiol zudosiert. Das Gemisch wird für 6 Stunden bei 60°C gerührt.

Man erhält 391 g eines hochviskosen Blockcopolymeren mit einem NCO-Gehalt von 0 Gew.-%, einem Carbodiimid-Gehalt von 13,0 Gew.-%, einem Glaspunkt von 10°C und einer mittleren Molmasse von 17000 g/mol.

### Beispiel 2g:

85,0 g des oligomeren Polycarbodiimides aus Beispiel 1a werden in 200 ml wasserfreiem Toluol unter Stickstoff bei 50°C homogenisiert. Anschließend werden 17,1 g eines Polyetherdiamins, aufgebaut aus Polypropylenglykol mit einer Aminzahl von 304,6 mg HCl/g, innerhalb von 15 min zugetropft. Anschließend wird der Ansatz 1 Stunde bei 60°C gerührt. Danach wird das Lösemittel im Vakuum abdestilliert.

Man erhält 81,7 g eines spröden Pulvers mit einem NCO-Gehalt von 0 Gew.-%, einem Carbodiimid-Gehalt von 10,5 Gew.-% und einem Glaspunkt von 122,7°C.

### Beispiel 2h: ( Vergleich )

100 g des oligomeren Polycarbodiimides aus Beispiel 1c werden bei 60°C in ein Rührgefäß unter Rühren vorgelegt. Anschließend werden 0,2 g Dibutylzinndilaurat und 9,2 g 1,4-Butandiol zugegeben und das Gemisch für 20 min intensiv bei 60°C gerührt.

Man erhält 108 g eines harten Blockcopolymeren mit einem NCO-Gehalt von 0 Gew.-%, einem Carbodiimid-Gehalt von 13,7 Gew.-%, einem Glaspunkt von 18°C und einer mittleren Molmasse von 12150 g/mol.

### Beispiel 2i: ( Vergleich )

350 g des oligomeren Polycarbodiimides aus Beispiel 1c werden bei 90°C in ein Rührgefäß unter Rühren vorgelegt. Anschließend werden 1,3 g Triethylendiamin und 76,7 g 2,2-Bis-(4-hydroxyphenyl)-propan zugegeben und das Reaktionsgemisch für 4 h bei 10°C gerührt.

Man erhält 426 g eines spröden Blockcopolymeren mit einem NCO-Gehalt von 0 Gew.-%, einem Carbodiimid-Gehalt von 12,2 Gew.-%, einem Glaspunkt von 25°C und einer mittleren Molmasse von 3756 g/mol.

### 3. Anwendungsbeispiele

### Beispiel 3a:

Die erfindungsgemäßen Blockcopolymere aus Beispiel 2a und 2b werden gemahlen und anschließend in unstabilisiertes, getrocknetes und gemahlenes Polyethylenterephthalat (PET) mit einer Dichte von 1,41 g/cm³, einer mittleren Molmasse von 62000 g/mol und einer intrinsischen Viskosität von 0,82 dl/g eingemischt. Die Konzentration in der Mischung beträgt jeweils 2 Gew.-%. Als Vergleichsbeispiel wird zum einen reines gemahlenes PET weiterverarbeitet und zum anderen gemahlenes PET mit 2 Gew.-% eines kommerziell erhältlichen Polycarbodiimides auf Basis 2,4,6-Triisopropylphenyl-1,3-diisocyanat mit einem Carbodiimid-Gehalt von 13,5 Gew.-%.

Aus den Mischungen werden mittels einer konventionellen Spritzgussmaschine bei Verarbeitungstemperatur von 255°C F-3-Normstäbe im Spritzguss-Verfahren hergestellt. Die Prüfstäbe wurden anschließend im Autoklaven bei 120°C mit Wasserdampf für 2 Tage gealtert.

Abschließend werden die gealterten Prüfstäbe mittels Zug-Dehnungsversuch bezüglich Reißdehnung und Reißfestigkeit untersucht.

| Probe | Beispiel 2a | Beispiel 2b | Vergleichsbeispiel 1 | Vergleichsbeispiel 2 |
|---|---|---|---|---|
| Beschreibung des Wirkstoffes | Block-copolymer | Block-copolymer | kein Wirkstoff | Poly-carbodiimid |
| NCN-Gehalt [Gew.-%] | 10,6 | 7,3 | - | 13,5 |
| Dosierung [Gew.-%) | 2 | 2 | - | 2 |
| Einarbeitungsverhalten | sehr gut | sehr gut | - | gut |
| Geruchsbelästigung | gering | gering | keine | stark |
| Reißfestigkeit vor Alterung [N/mm²] | 67,2 | 66,5 | 68,3 | 66,4 |
| Reißdehnung vor Alterung [%] | 6,0 | 6,0 | 6,0 | 6,1 |
| Reißfestigkeit nach Alterung [N/mm²] | 65,6 | 50,2 | 16,6 | 55,2 |
| Reißdehnung nach Alterung [%] | 5,1 | 3,8 | 1,8 | 3,9 |

Das Anwendungsbeispiel verdeutlicht, dass die erfindungsgemäßen Blockcopolymere bessere oder gleiche stabilisierende Wirkung gegen den hydrolytischen Abbau in PET aufweisen. Gleichzeitig ist das Einarbeitungsverhalten der erfindungsgemäßen Blockcopolymere gut und es zeigen sich keine Geruchsbelästigungen bei der Verarbeitung.

### Beispiel 3b ( Vergleich )

Die erfindungsgemäßen Blockcopolymere aus Vergleichs-Beispiel 2h und 2i werden gemahlen und anschließend in unstabilisiertes, getrocknetes und gemahlenes Thermoplastisches Polyurethan (TPU), Polyester-Polyurethan mit einer Dichte von 1,2 g/cm³ und einer Shore-A-Härte von 84, eingemischt. Die Konzentration in der Mischung beträgt jeweils 2 Gew.-%. Als Vergleichsbeispiel wird zum einen reines gemahlenes TPU weiterverarbeitet und zum anderen gemahlenes TPU mit 2 Gew.-% eines kommerziell erhältlichen Carbodiimides auf Basis 2,6-Diisopropylphenylisocyanat mit einem Carbodiimid-Gehalt von 10,5 Gew.-%.

Aus den Mischungen werden mittels einer konventionellen Spritzgussmaschine bei Verarbeitungstemperatur von 190°C F-3-Normstäbe im Spritzguss-Verfahren hergestellt. Die Prüfstäbe wurden anschließend im Autoklaven bei 100°C mit Wasserdampf für 4 Tage gealtert.

Abschließend werden die gealterten Prüfstäbe mittels Zug-Dehnungsversuch bezüglich Reißdehnung und Reißfestigkeit untersucht.

| Probe | Beispiel 2h (Vergleich) | Beispiel 2i (Vergleich) | Vergleichsbeispiel 1 | Vergleichsbeispiel 2 |
|---|---|---|---|---|
| Beschreibung des Wirkstoffes | Block-copolymer | Block-copolymer | kein Wirkstoff | Carbodiimid |
| NCN-Gehalt [Gew.-%] | 13,7 | 12,2 | - | 10,5 |
| Dosierung [Gew.-%) | 2 | 2 | - | 2 |
| Einarbeitungsverhalten | sehr gut | sehr gut | - | sehr gut |
| Geruchsbelästigung | gering | gering | keine | stark |
| Reißfestigkeit vor Alterung [N/mm²] | 12,6 | 12,8 | 13,7 | 12,0 |
| Reißdehnung vor Alterung [%] | 536 | 535 | 535 | 536 |
| Reißfestigkeit nach Alterung [N/mm²] | 13,5 | 13,1 | 6,0 | 7,6 |
| Reißdehnung nach Alterung [%] | 536 | 531 | 18,3 | 22,8 |

## Patentansprüche

1. Blockcopolymere auf Basis von Polycarbodiimiden der Formel (I),
X-[-(A)ₘ-(B)ₙ-]ₒ-X (I)
in der
X gleich oder verschieden und ausgewählt ist aus der Gruppe -NHCO-R, -NHCONH-R, -NHCOO-R, -NHCOS-R, -COO-R, -O-R, -NR₂, -S-R, -S-H, -OH, -NH₂, und -NHR, wobei die Reste R einen Alkyl-, Cycloalkyl-, Aralkyl- oder Aryl-Rest mit 1 bis 30 Kohlenstoffatomen bedeuten,
n eine ganze Zahl von 1 bis 1000 darstellt,
m eine ganze Zahl von 5 bis 200 darstellt,
o eine ganze Zahl von 1 bis 500 ist,
A ausgewählt ist aus der Gruppe der Carbodiimide oder Polycarbodiimide der Formel (II)
-(-N=C=N-Y-)-
in der
Y ausgewählt ist aus der Gruppe von ortho- oder bisortho-substituierten Aromaten und substituierten Diisocyanatodiphenylmethanen,
und
B ausgewählt ist aus der Gruppe (Poly)Diole, (Poly)Diamine, (Poly)Dimercaptane, (Poly)Aminoalkohole, (Poly)Aminomercaptane und (Poly)Mercaptoalkohole.

2. Blockcopolymere gemäss Anspruch 1, in denen Y in der Formel (II) einen Block auf Basis 2,4,6-Triisopropylphenyl-1,3-diisocyanat bedeutet.

3. Blockcopolymere gemäss Anspruch 1, in denen Y in der Formel (II) einen Block auf Basis 3,3',5,5'-Tetraisopropyl-4,4'-diisocyanatodiphenylmethan bedeutet.

4. Herstellung der Verbindungen nach Anspruch 1 , **dadurch gekennzeichnet, dass** die Komponenten A und B der Formel (I) in Gegenwart eines Katalysators bei einer Reaktionstemperatur von 30 °C bis 200 °C copolymerisiert werden.

5. Verwendung der Blockcopolymere nach Anspruch 1 als Hydrolysestabilisator in Estergruppen enthaltenden Polymerisaten.

## Claims

1. Block copolymers based on polycarbodiimides of the formula (I),
X-[-(A)ₘ-(B)ₙ-]ₒ-X (I)
in which:
X is identical or different and has been selected from the group of NHCO-R, -NHCONH-R, -NHCOO-R, -NHCOS-R, -COO-R, -O-R, -NR₂, -S-R, -S-H, -OH, -NH₂, and -NHR, where the moieties R are an alkyl, cycloalkyl, aralkyl or aryl moiety having from 1 to 30 carbon atoms,
n is an integer from 1 to 1000,
m is an integer from 5 to 200,
o is an integer from 1 to 500,
A has been selected from the group of the carbodiimides or polycarbodiimides of the formula (II)
-(-N=C=N-Y-)-
in which
Y has been selected from the group of ortho- or bisortho-substituted aromatics and substituted diisocyanatodiphenylmethanes,
and
B has been selected from the group of (poly)diols, (poly)diamines, (poly)dimercaptans, (poly)aminoalcohols, (poly)aminomercaptans and (poly)mercaptoalcohols.

2. Block copolymers according to Claim 1, in which Y in the formula (II) is a block based on 2,4,6-triisopropylphenyl 1,3-diisocyanate.

3. Block copolymers according to Claim 1, in which Y in formula (II) is a block based on 3,3',5,5'-tetraisopropyl-4,4'-diisocyanatodiphenylmethane.

4. Production of the compounds according to Claim 1, **characterized in that** components A and B of formula (I) are copolymerized in the presence of a catalyst at a reaction temperature of from 30°C to 200°C.

5. Use of the block copolymers according to Claim 1 as hydrolysis stabilizer in polymers comprising ester groups.

## Revendications

1. Copolymères à blocs à base de polycarbodiimides de formule (I),
X-[-(A)ₘ-(B)ₙ-]ₒ-X (I)
où
X est identique ou différent et choisi dans le groupe formé par -NHCO-R, -NHCONH-R, -NHCOO-R, -NHCOS-R, -COO-R, -O-R, -NR₂, -S-R, -S-H, -OH, -NH₂, et -NHR, les radicaux R signifiant un radical alkyle, cycloalkyle, aralkyle ou aryle comprenant 1 à 30 atomes de carbone,
n représente un nombre entier de 1 à 1000,
m représente un nombre entier de 5 à 200,
o vaut un nombre entier de 1 à 500,
A est choisi dans le groupe des carbodiimides ou des polycarbodiimides de formule (II)
-(-N=C-N-Y-)-
où
Y est choisi dans le groupe formé par les aromatiques substitués en position ortho ou bis- ortho et les diisocyanatodiphénylméthanes substitués, et
B est choisi dans le groupe des (poly)diols, des (poly)diamines, des (poly)dimercaptans, des (poly)aminoalcools, des (poly)aminomercaptans et des (poly)mercaptoalcools.

2. Copolymères à blocs selon la revendication 1, dans lesquels Y dans la formule (II) signifie un bloc à base de 2,4,6-triisopropylphényl-1,3-diisocyanate.

3. Copolymères à blocs selon la revendication 1, dans lesquels Y dans la formule (II) signifie un bloc à base de 3,3',5,5'-tétra-isopropyl-4,4'-diisocyanatodiphénylméthane.

4. Préparation des composés selon la revendication 1, **caractérisée en ce que** les composants A et B de formule (I) sont copolymérisés en présence d'un catalyseur à une température de réaction de 30°C à 200°C.

5. Utilisation des copolymères à blocs selon la revendication 1 comme stabilisateur à l'hydrolyse dans des polymères contenant des groupes ester.
